# EUROPÄISCHE PATENTSCHRIFT

(11) **EP 0 658 523 B1**
(45) Veröffentlichungstag und Bekanntmachung des Hinweises auf die Patenterteilung: **25.03.1998**
(21) Anmeldenummer: 93830502.6
(22) Anmeldetag: 14.12.1993
(51) Int. Cl.: C03C 8/14, C03C 8/16, C23D 5/04

(54) **Hydrophobe, fliessfähige Aufbaugranulate, ein Verfahren zu ihrer Herstellung sowie ihre Verwendung**
Hydrophobic, free-flowing constituent granules, a method for their production and their use
Granulés hydrophobes fluides, un procédé pour leur production et leur utilisation

(43) Veröffentlichungstag der Anmeldung: 21.06.1995
(73) Patentinhaber: FERRO (ITALIA) s.r.l., I- 40123 Bologna (IT)
(72) Erfinder: Thometzek, Peter, Dr., Florano Modenese (MO) (IT); Christ, Heinrich, Dr., Spilamberto - S. Vito (MO) (IT)
(74) Vertreter: Türk, Gille, Hrabal, Leifert

(56) Entgegenhaltungen:
- EP-A- 0 179 379
- EP-A- 0 492 280
- EP-A- 0 504 683

## Beschreibung

Die Erfindung betrifft ein Verfahren zum Herstellen hydrophober, fließfähiger Aufbaugranulate mit einer mittleren Korngröße von 5 bis 150 µm, die aus einem beziehungsweise vorzugsweise mehreren hydrophilen anorganischen Pulvern mit einer Korngröße von > 0 bis 30 µm bestehen und ein beziehungsweise mehrere hydrophobe Polyorganosiloxane in einer Menge von 0,03 bis 15 Gew.-% enthalten, sowie die Verwendung dieser Aufbaugranulate.

Es ist bekannt (EP-A-0 179 379), Aufbaugranulate aus Farbkörpern und Fritteteilchen herzustellen, die Organopolysiloxane und Bindemittel enthalten. Die Agglomerate bestehen aus Fritteteilchen, an denen Farbkörper angelagert sind. Beim Herstellen dieser Granulate werden die Fritteteilchen und die Farbkörper zusammen mit Siloxan und Bindemittel solange vermahlen, bis der Rückstand auf dem Sieb etwa 40 µm beträgt. Es findet also eine Mahlgranulierung statt.

Es ist bekannt, daß sich Emailpulver elektrisch aufladen lassen und im elektrischen Feld mit einer Potentialdifferenz von ca. 50.000 bis 100.000 V auf metallische Unterlagen aufgetragen werden können. Für den elektrostatischen Pulverauftrag sind Pulver mit einem spezifischen Widerstand von mehr als 10¹² Ohm.cm geeignet. Emailpulver weisen normalerweise einen spezifischen elektrischen Widerstand von etwa 10⁷ Ohm.cm auf. Die Kornoberflächen der Emailpulver werden deshalb mit isolierenden Substanzen überzogen, die in einer Menge von 0,1 bis 2 Gew.-% den Emailfritten vor oder während der Trockenmahlung zugesetzt werden. Die so behandelten Emailpulver zeigen einen spezifischen Widerstand von 10¹² bis 10¹⁶ Ohm.cm. Als isolierende Substanzen werden Silanole, Isocyanate, Siliciumstickstoff-verbindungen, Karbodiimide und Organopolysilanole eingesetzt (DE 2.015.072 und US 3.928.668).

Auf diese Weise werden jedoch lediglich hydrophobe Pulver bestehend aus einer einzelnen Fritte beziehungsweise aus mehreren chemisch sehr ähnlichen Fritten erhalten. Der Einsatz von hydrophoben Pulvern, die aus beliebigen Fritten und / oder Glasurrohstoffen und / oder anorganischen Farbkörpern bestehen, ist nicht möglich, da beim elektrostatischen Auftrag eine Entmischung des mehrkomponentigen Pulvers aufgrund der unterschiedlichen Kornverteilung, Dichte und Beladung der Komponenten erfolgt. Eine Rezyklierung ist damit auch unmöglich.

In EP 179.379 ist ein Verfahren zum elektrostatischen Versprühen von Gemischen unterschiedlicher, anorganischer Pulver mit hohem Oberflächenwiderstand beschrieben, wobei Agglomerate gebildet werden, indem man den Pulvergemischen vor oder während der Trockenmahlung ungesättigte organische Verbindungen zugibt. Das Verfahren ist auf anorganische Pulver mit hohem Oberflächenwiderstand beschränkt, das heißt, hydrophile, anorganische Pulver wie Fritten, Gläser, Glasurrohstoffe, Farbkörper oder Pigmente oder deren Mischungen können nicht eingesetzt werden.

In DE 2.440.964 werden anorganische Pulver mit 1 bis 15 Gew.-% Kunststoff beschichtet. Die anorganischen Teilchen müssen zuerst mit einem Oberflächenbehandlungsmittel behandelt werden, um mit dem Kunststoff verträglich zu werden. Danach werden die so behandelten Teilchen mit dem Kunststoff mit Hilfe der Luftsuspensionsmethode beziehungsweise der phasentrennung beschichtet. Das Verfahren ist aufwendig und teuer. Für die Handhabung von beliebigen, hydrophilen, anorganischen Pulvern ist das Verfahren nicht geeignet.

In DE 3.232.635 wird die Agglomeration von feinen Pulvern durch Acryl- beziehungsweise Methacrylsäureester als Bindemittel beschrieben. Die erhaltenen Agglomerate sind nicht hydrophob, weisen einen zu geringen elektrischen Widerstand auf und sind für den pulverelektrostatischen Auftrag nicht geeignet.

Aufgabe war es, für den pulverelektrostatischen Auftrag geeignete, leicht herstellbare, hydrophobe, fließfähige Produkte mit einem hohen elektrischen Widerstand herzustellen, die auch aus einem beziehungsweise aus mehreren hydrophilen, anorganischen Pulvern mit unterschiedlicher Kornverteilung, unterschiedlichem spezifischen Gewicht und / oder unterschiedlichem elektrischen Widerstand (wie beispielsweise hydrophile Pulver mit niedrigem elektrischen Widerstand) bestehen können und keine Entmischung zeigen, so daß sie auch rezykliert werden können.

Diese Aufgabe konnte überraschenderweise mit den erfindungsgemäßen Verfahren zum Herstellen hydrophober, fließfähiger Aufbaugranulate gemäß Patentanspruch 1 gelöst werden.

Gemäß der Erfindung werden hydrophobe, fließfähige Aufbaugranulate mit einer mittleren Korngröße von 5 bis 150 µm aus einem beziehungsweise mehreren hydrophilen, anorganischen Pulvern mit einer mittleren Korngröße von > 0 bis 30 µm, enthaltend ein beziehungsweise mehrere hyrophobe Polyorganosiloxane in einer Menge von 0,03 bis 15 Gew.-%, vorzugsweise 0,05 bis 3 Gew.-% und gegebenenfalls ein oder mehrere temporäre und / oder permanente Bindemittel in einer Menge bis zu 15 Gew.-% hergestellt.

Hydrophile, anorganische Pulver sind vorzugsweise Glasurrohstoffe, wie beispielsweise Tone, Kaoline, Feldspäte, Aluminiumoxid, Wollastonit, Dolomit, Kalziumkarbonat, Zinkoxid etc., Fritten, Gläser, anorganische Farbkörper, Pigmente, wie beispielsweise Zirkonsilikat, Titandioxid, Zinndioxid, Eisenoxide, Mischphasenoxide etc., Metalle wie beispielsweise Hartmetalle, Metallegierungen und Metalloxide, -nitride, -carbide, -sulfide und -boride, wie beispielsweise ZrO₂, Si₃N, SiC, B₄C, WC, AlB, AlN etc.

Die Fritten und Gläser weisen vorzugsweise folgende Zusammensetzung auf:

| | |
|---|---|
| SiO₂ + B₂O₃ | 20 - 80 Gew.-% |
| Al₂O₃ | 0 - 20 Gew.-% |
| R¹₂O + R²O | 5 - 70 Gew.-% |
| TiO₂ + ZrO₂ | 0 - 30 Gew.-% |
| PbO + Bi₂O₃ + P₂O₅ | 0 - 80 Gew.-% |
| V₂O₅ + MoO₃ + WO₃ | 0 - 10 Gew.-% |

wobei R¹₂O = Li₂O + Na₂O + K₂O
und R²O = MgO + CaO + SrO + BaO + ZnO sind.

Auch Oxinitridgläser und/oder Oxicarbidgläser können eingesetzt werden.

Es können organische wie anorganische Bindemittel eingesetzt werden.

Als organische Bindemittel werden vorzugsweise temporäre Binder wie Stärke- und Dextrinleime, Celluloseether wie beispielsweise Methylcellulose oder Carboxymethylcellulose, Bindemittel auf Polysaccharidbasis, Klebstoffe auf Basis von Polyvinylacetaten, Polyacrylaten, Polyvinylalkoholen, Dispersionsklebstoffe auf Kunstharz- oder Kautschukbasis, ein- oder zweikomponentenhaltige Polymerisationsklebstoffe, Polyadditionsklebstoffe und Polykondensationsklebstoffe eingesetzt.

Als anorganische, permanente Bindemittel werden vorzugsweise Natriumsilikat, Kaliumsilikat, Aluminiumphosphat, insbesondere Monoaluminiummonophosphat, Chromphosphat, insbesondere Monochromphosphat, Phosphorsäure, Natriumaluminiumphosphat, Natriumaluminat, Borphosphat, Aluminiumsilikat, Natriumcalciumsilikat, Kaliumcalciumsilikat, Silikophosphat, Kieselsol und Al(OH)₃-Sol eingesetzt.

Entweder allein oder in geeigneter Kombination werden vorgenannte Bindemittel bevorzugt in einer Menge bis zu 15 Gew.-% eingesetzt.

Das erfindungsgemäße Verfahren zum Herstellen hydrophober, fließfähiger Aufbaugranulate mit einer mittleren Korngröße von 5 bis 150 µm und einem Gehalt an Polyorganosiloxanen von 0,03 bis 13 Gew.-% sowie gegebenenfalls einem oder mehreren temporären und/oder permanenten Bindemitteln in einer Menge bis zu 15 Gew.-%, ist im einzelnen dadurch gekennzeichnet, daß man ein beziehungsweise vorzugsweise mehrere hydrophile, anorganische Pulver mit einer mittleren Korngröße von > 0 bis 30 µm in einem Granulieraggregat, wie beispielsweise einem Mischaggregat, Zwangsmischer oder Granulierteller, mit einer wäßrigen Emulsion eines oder mehrerer hydrophober Polyorganosiloxane in einer Menge von 0,05 bis 15 Gew.-% Polyorganosiloxan, vorzugsweise 0,05 bis 3 Gew.-% Polyorganosiloxan, gegebenenfalls unter Zusatz von einem oder mehreren temporären und/oder permanenten Bindemitteln in wäßrigen Medium in einer Menge von bis zu 15 Gew.-% versetzt und anschließend bis zu 24 Stunden bei einer Temperatur zwischen 120 bis 600°C, vorzugsweise zwischen 200 bis 400°C, getempert wird.

Die hydrophoben Polyorganosiloxane werden bei der Herstellung der erfindungsgemäßen hydrophoben Aufbaugranulate bevorzugt in wäßriger Emulsion eingesetzt. Hierdurch wird eine gleichmäßige Benetzung der Pulverpartikel mit den emulgierten Polyorganosiloxantröpfchen erreicht. Diese bilden dann bei der anschließenden Temperung eine hydrophobe Schicht mit hohem elektrischen Widerstand um das Aufbaugranulat.

Eingesetzte Polyorganosiloxane sind beispielsweise Trimethylsililpolydimethylsiloxane, die gegebenenfalls auch Methylphenyl- beziehungsweise Diphenylsiloxygruppen aufweisen können.

Vorzugsweise erfolgt die Zugabe der wäßrigen Emulsion der Polyorganosiloxane zur Granulation zusammen mit einem weiteren Bindemittel. Die Zugabe der Emulsion kann aber auch gegen Ende des Granulationsprozesses erfolgen, wobei in diesem Fall im Anfangsstadium mit einem oder mehreren temporären beziehungsweise permanenten Bindemitteln benetzt beziehungsweise agglomeriert wird.

Als Granulieraggregate werden vorzugsweise Mischaggregate, Zwangsmischer, Granulierteller beziehungsweise Fließbettgranulatoren eingesetzt.

Zum Verfestigen der Granulate sowie zum Entfernen des enthaltenen Wassers ist nach der Agglomeration eine Temperung der Aufbaugranulate zwischen 120 und 600°C, vorzugsweise zwischen 200 und 400°C, erforderlich.

Eine weitere bevorzugte Ausführungsform ist die Herstellung der erfindungsgemäßen Aufbaugranulate ausgehend von einer wäßrigen Suspension der hydrophilen anorganischen Pulver unter Zusatz der wäßrigen Emulsion des/der Polyorganosiloxane sowie gegebenenfalls des/der weiteren organischen und/oder anorganischen Bindemittel in einem Sprühtrockner.

Die Herstellung des hydrophoben Aufbaugranulates kann auch in einem Fließetttrockner, Walzentrockner beziehungsweise Heißgasreaktor, vorzugsweise mit starker Wirbelströmung erfolgen (Turbulator, Fa. Maurer beziehungsweise Reaktionskammer, Fa. Babcock).

Die erfindungsgemäßen Aufbaugranulate stauben nicht, da sie einen Feinanteil von < 2 µm von weniger als 5 Gew.-%, vorzugsweise von weniger als 2 Gew.-% aufweisen. Dadurch kann nach Brand reduziert werden. Bei den bisher bekannten, durch Trockenmahlung erzeugten Pulvern ist für den pulverelektrostatischen Auftrag vor allem der Feinanteil von < 2 µm für die Blasenbildung verantwortlich.

Aufgrund ihrer hervorragenden Fließeigenschaften und hohen Abriebfestigkeit können die erfindungsgemäßen Aufbaugranulate Problemlos beim elektrostatischen Auftrag rezykliert werden, so daß beim Glasurauftrag eine Ausbeute von über 97 Gew.-% erhalten wird.

Die erfindungsgemäßen hydrophoben, fließfähigen Aufbaugranulate werden vorzugsweise für den elektrostatischen Auftrag verwendet. Es werden damit beispielsweise Fliesen für Fußböden oder den Wandbereich, Porzellan, Geschirr, Sanitärkeramiken, Ziegel, Baukeramiken oder andere keramische Gebrauchsgegenstände beschichtet.

Vorzugsweise werden die erfindungsgemäßen hydrophoben Aufbaugranulate auch beim pulverelektrostatischen Auftrag zum Herstellen von Emaillierungen, insbesondere von Farbemaillierungen, verwendet.

Alternativ zum pulverelektrostatischen Auftrag können die erfindungsgemäßen Aufbaugranulate auch durch Trockenauftrag wie beispielsweise Aufsieben, Aufstreuen oder Aufsprühen mit Spritzpistolen appliziert werden.

Eine weitere bevorzugte Anwendung der erfindungsgemäßen hydrophoben Aufbaugranulate ist die Einarbeitung in keramische Schichten beziehungsweise Medien wie beispielsweise Kunststoffe oder Lacke.

Zum Einarbeiten in Kunststoffe oder Lacke eignen sich im besonderen die erfindungsgemäßen Aufbaugranulate mit einem hohen Anteil an einem beziehungsweise mehreren anorganischen Farbkörpern und/oder Pigmenten.

In einer bevorzugten Ausführungsform für diesen Anwendungsbereich werden ausschließlich aus einem oder mehreren anorganischen Farbkörpern und/oder Pigmenten mit der wäßrigen Emulsion des/der Organopolysiloxane und gegebenenfalls unter Zusatz eines beziehungsweise mehrerer temporärer und/oder permanenter Bindemittel vorzugsweise durch Sprühtrocknung fließfähige, hydrophobe gut dispergierbare Aufbaugranulate hergestellt.

Die Erfindung soll anhand des nachfolgenden Beispieles näher erläutert werden.

### Beispiel

In einer 5 kg-Porzellankugelmühle werden folgende Produkte auf eine mittlere Korngröße von ca. 10 µm mit einem Kornanteil von > 40 µm von unter 1 Gew.-% gebracht:
- 10 Gew.-%: einer keramischen Fritte auf Basis von SiO₂, B₂O₃, Al₂O₃ und Na₂O
- 10 Gew.-%: einer keramischen Fritte auf Basis von SiO₂, B₂O₃, Al₂O₃ und ZrO₂
- 24 Gew.-%: Natriumfeldspat
- 5 Gew.-%: Zinkoxid
- 20 Gew.-%: Wollastonit
- 6 Gew.-%: Kaolin
- 8 Gew.-%: Aluminiumoxid
- 17 Gew.-%: Zirkonsilikat

Die Trockenmahlung erfolgt unter Zusatz von 0,2 Gew.-% Propylenglycol.

2,0 kg des erhaltenen, feinen anorganischen Pulvergemisches sowie 60 g eines anorganischen Farbkörpers auf Basis von Fe₂O₃, ZrO₂ und SiO₂ werden in einem Zwangsmischer (Fa. Eirich) vorgelegt und unter starker Bewegung langsam mit 460 g einer 32 Gew.-%igen Kaliumsilikatlösung sowie 20 g einer wäßrigen Emulsion eines hydrophoben Polyorganosiloxanes (Baysilon AC 3454, Handelsprodukt der Fa. Bayer AG, Leverkusen) versetzt. Nach 5minütiger, intensiver Granulation wird in einem Trockenschrank 2 Stunden bei 250°C getempert.

Nach Absiebung des Grobanteils über 200 µm weist das erhaltene Granulat ein Kornverteilungsmaximum bei 40 µm, einen elektrischen Widerstand von 4.10¹⁵ Ohm.cm und ein Fließverhalten von 98 g/30 sec., gemessen mit einem Gerät der Fa. Sames, Grenoble, auf.

Die Meßmethode wird von H.J. Schittenhelm in Mitteilungen VDEFa 33, 137-148 (1984) ausführlich beschrieben.

Der pulverelektrostatische Auftrag des hydrophoben Aufbaugranulates erfolgt bei 50 KV. Auf einen keramischen Scherben einer Größe von 20 x 25 cm, der mit einer weißen Engobe versehen ist, werden 50 g des Aufbaugranulates aufgebracht. Der Brand erfolgt innerhalb 70 Minuten bei einer maximalen Temperatur von 1170°C in einen Rollenofen.

Man erhält eine seidenmatte Fußbodenglasur mit fehlerfreier Oberfläche und geringer Welligkeit.

## Patentansprüche

1. Verfahren zum Herstellen hydrophober fließfähiger Aufbaugranulate mit einer mittleren Korngröße von 5 bis 150 µm und einem Gehalt an Polyorganosiloxanen von 0,03 bis 15 Gew.-% sowie gegebenenfalls einem oder mehreren temporären und/oder permanenten Bindemitteln in einer Menge bis zu 15 Gew.-%,
**dadurch gekennzeichnet,**
daß ein beziehungsweise vorzugsweise mehrere hydrophile, anorganische Pulver mit einer mittleren Korngröße von > 0 bis 30 µm in einem Granulieraggregat mit einer wäßrigen Emulsion eines oder mehrerer hydrophober Polyorganosiloxane in einer Menge von 0,05 bis 15 Gew.-% Polyorganosiloxan, vorzugsweise 0,05 bis 3 Gew.-% Polyorganosiloxan, bezogen auf das/die anorganischen Pulver, gegebenenfalls unter Zusatz von einem oder mehreren temporären und/oder permanenten Bindemitteln in wäßrigem Medium von bis zu 15 Gew.-% versetzt werden und anschließend bis zu 24 Stunden bei einer Temperatur zwischen 120 und 600° C, vorzugsweise zwischen 200 und 400° C getempert wird.

2. Verfahren nach Anspruch 1, dadurch gekennzeichnet, daß als anorganische Pulver Glasurrohstoffe, Fritten, Gläser, Pigmente, anorganische Farbkörper, Metalle, Metallegierungen, Metalloxide, -nitride, -carbide, -sulfide und/oder -boride eingesetzt werden.

3. Verfahren nach Anspruch 1 oder 2, dadurch gekennzeichnet, daß die Aufbaugranulate ausgehend von einer wäßrigen Suspension der hydrophilen anorganischen Pulver unter Zusatz der wäßrigen Emulsion des/der Polyorganosiloxane sowie gegebenenfalls des/der weiteren organischen und/oder anorganischen Bindemittel in einem Sprühtrockner hergestellt werden.

4. Verwendung der nach dem Verfahren gemäß einem der Ansprüche 1 bis 3 hergestellten hydrophoben, fließfähigen Aufbaugranulate für den elektrostatischen Auftrag auf Substrate, insbesondere auf keramische Substrate.

5. Verwendung der nach dem Verfahren gemäß einem der Ansprüche 1 bis 3 hergestellten hydrophoben, fließfähigen Aufbaugranulate zur Herstellung von keramischen Schichten beziehungsweise hydrophobe Medien wie Kunststoffe oder Lacke.

6. Verwendung der nach dem Verfahren gemäß einem der Ansprüche 1 bis 3 hergestellten hydrophoben, fließfähigen Aufbaugranulate zur Einarbeitung in keramische Schichten beziehungsweise hydrophobe Medien wie Kunststoffe oder Lacke.

7. Verwendung der nach dem Verfahren gemäß einem der Ansprüche 1 bis 3 hergestellten hydrophoben, fließfähigen Aufbaugranulate zur Herstellung von Emailschichten oder Emaillierungen.

## Claims

1. Method of producing hydrophobic, free-flowing granular coating materials having an average particle size of 5 to 150 µm and a content of polyorganosiloxanes of 0,03 to 15 % by weight ad optionally one or more temporary and/or permanent binders in an amount up to 15 % by weight,
**characterized in that**
one or preferably more hydrophilic inorganic powders with an average particle size of > 0 to 30 µm are mixed in a granulating unit with a aqueous emulsion of one or more hydrophobic polyorganosiloxanes in an amount of 0,05 to 15 % by weight of polyorganosiloxane, preferably 0,05 to 3 % by weight of polyorganosiloxane, with respect to the inorganic powder(s), optionally with the addition of up to 15 % by weight of one or more temporary and/or permanent binders in an aqueous medium, and are subsequently calcined for up to 24 hours at a temperature between 120 and 600° C, preferably between 200 and 400° C.

2. Method according to claim 1, characterized in that glaze materials, frits, glasses, pigments, inorganic colouring bodies, metals, metal alloys, or metal oxides, nitrides, carbides, sulphides and/or borides are used as the inorganic powders.

3. Method of claims 1 or 2, characterized in that the granular coating materials are produced from a aqueous suspension of the hydrophobic inorganic powders with the addition of the aqueous emulsion of the polyorganosiloxane(s) and optionally of the further organic and/or inorganic binder(s) in a spray drying device.

4. Use of the hydrophobic, free-flowing granular coating materials produced by the method of one of claims 1 to 3 for electrostatic deposition on substrates, particularly on ceramic substrates.

5. Use of the hydrophobic, free-flowing granular coating materials produced by the method of one of claims 1 to 3 for the production of ceramic coatings or hydrophobic media such as plastics or lacquers, respectively.

6. Use of the hydrophobic, free-flowing granular coating materials produced by the method of one of claims 1 to 3 for incorporating into ceramic coatings or hydrophobic media such as plastics or lacquers, respectively.

7. Use of the hydrophobic, free-flowing granular coating materials produced by the method of one of claims 1 to 3 for the production of enamel coatings (enamels).

## Revendications

1. Procédé de préparation de granulés de synthèse coulants, hydrophobes, ayant une taille de particules moyenne de 5 à 150 µm et une teneur en polyorganosiloxanes de 0,03 à 15 % en masse, et contenant éventuellement un ou plusieurs liants temporaires et/ou permanents en une quantité allant jusqu'à 15 % en masse,
**caracterisé en ce que**
l'on mélange une ou de préférence plusieurs poudres inorganiques hydrophiles ayant une taille de particules moyenne comprise entre > 0 et 30 µm dans un appareil de granulation avec une émulsion aqueuse d'un ou plusieurs polyorganosiloxanes hydrophobes en une quantité de 0,05 à 15 % en masse de polyorganosiloxane, de préférence de 0,05 à 3 % en masse de polyorganosiloxane par rapport à la ou aux poudres inorganiques, en ajoutant éventuellement un ou plusieurs liants temporaires et/ou permanents en milieu aqueux en une quantité allant jusqu'à 15 % en masse, et en ce qu'on procède ensuite à un étuvage durant jusqu'à 24 heures à une température comprise entre 120 et 600° C, de préférence entre 200 et 400° C.

2. Procédé selon la revendication 1, caractérisé en ce que l'on utilise comme poudres inorganiques des matières premières de glaçures, des frittes, des verres, des pigments, des colorants inorganiques, des métaux, des alliages de métaux, des oxydes, nitrures, carbures, sulfures et/ou borures métalliques.

3. Procédé selon les revendications 1 ou 2, caractérisé en ce que l'on prépare les granulés de synthèse coulants hydrophobes d'une suspension aqueuse de poudres inorganiques hydrophiles, en ajoutant l'émulsion aqueuse d'un ou plusieurs polyorganosiloxanes hydrophobes et contenant éventuellement un ou plusieurs liants organiques et/ou inorganiques dans un séchoir à pulverisation.

4. Utilisation des granulés de synthèse coulants hydrophobes préparé selon le procédé d'une des revendications 1 à 3 pour l'application électrostatique sur des substrats, en particulier sur des substrats céramiques.

5. Utilisation des granulés de synthèse coulants hydrophobes préparé selon le procédé d'une des revendications 1 à 3 pour la préparation de couches céramiques par application à sec, en particulier par tamissage, saupoudrage ou pulvérisation.

6. Utilisation des granulés de synthèse coulants hydrophobes préparé selon le procédé d'une des revendications 1 à 3 pour l'incorporation dans des couches céramiques ou des milieux hydrophobes tels que des matières plastiques ou des laques.

7. Utilisation des granulés de synthèse coulants hydrophobes préparé selon le procédé d'une des revendications 1 à 3 pour la préparation de couches d'émail (émaillages).
